# EUROPÄISCHE PATENTSCHRIFT

(11) **EP 1 882 919 B1**
(45) Veröffentlichungstag und Bekanntmachung des Hinweises auf die Patenterteilung: **24.03.2010**
(21) Anmeldenummer: 07010407.0
(22) Anmeldetag: 24.05.2007
(51) Int. Cl.: G01K 3/04

(54) **Zeit-Temperatur-Indikator zur Kennzeichnung von Waren**
Time Temperature Indicator for identifying goods
Indicateur de temps-température destiné au marquage de marchandises

(30) Priorität: 27.07.2006 DE 102006034809
(43) Veröffentlichungstag der Anmeldung: 30.01.2008
(73) Patentinhaber: Bizerba GmbH & Co. KG, 72336 Balingen (DE)
(72) Erfinder: Feuerstack, Michael, 44265 Dortmund (DE); Jannasch, Uwe, 44388 Dortmund (DE)
(74) Vertreter: Manitz, Finsterwald & Partner GbR

(56) Entgegenhaltungen:
- EP-A- 1 403 666
- WO-A-2005/016654
- US-A1- 2004 253 733

## Beschreibung

Die Erfindung betrifft einen Indikator zur Kennzeichnung von Waren mit einer temperatur- und/oder zeitsensitiven, mittels Lichtstrahlen aktivierten Schicht, welche auf ihrer Oberseite mit einem Filter versehen ist.

Aus dem Stand der Technik sind temperatur- und/oder zeitsensitive Indikatoren bekannt, die beispielsweise auf einem Etikett, einer Produktverpackung oder direkt auf einem Produkt angeordnet werden können. Solche Indikatoren sind dazu geeignet, anzuzeigen, ob ein dem Indikator zugeordnetes Produkt während des Zeitraums, in dem es mit dem Indikator versehen war, ausreichend kühl gelagert wurde und/oder ob das Produkt ein vorbestimmtes Alter überschritten hat. Es existieren Indikatoren, die ausschließlich zeitsensitiv und damit unabhängig von der jeweiligen Temperatur sind, so dass sie ausschließlich das Alter eines Produkts kennzeichnen können. Weiterhin sind zeit- und temperatursensitive Indikatoren bekannt, welche sich sowohl in Abhängigkeit von der jeweils verstrichenen Zeit als auch in Abhängigkeit von der Temperatur, der sie jeweils ausgesetzt sind, verändern. Schließlich sind auch Indikatoren bekannt, die ausschließlich temperatursensitiv ausgebildet sind. Die vorliegende Erfindung bezieht sich auf alle genannten Arten von Indikatoren.

Ein temperatur- und zeitsensitiver Indikator ist beispielsweise aus dem deutschen Patent DE 198 03 208 C2 bekannt, welches einen mit einem Produkt koppelbaren Zeit-Temperatur-Indikator betrifft, der zu einem beliebigen Zeitpunkt durch Lichteinstrahlung, insbesondere durch UV-Licht, aktiviert werden kann. Durch Bestrahlung mit Licht einer vorgegebenen Bestrahlungsstärke und einem vorgegebenen Wellenlängenbereich erfährt ein solcher Indikator also eine bestimmte Verfärbung, wodurch er praktisch "aufgeladen" wird. Im Anschluss an diese Aktivierung tritt dann - sofern keine neuerliche Aktivierung erfolgt - eine Entfärbung des Indikators ein, deren Maß sowohl abhängig vom Zeitablauf als auch von Temperatureinflüssen ist.

Wenn zu einem Prüfzeitpunkt festgestellt wird, dass das Maß der Entfärbung einen vorgegebenen Wert übersteigt, kann eine Aussage dahingehend getroffen werden, dass das Alter des Produkts zu hoch ist und/oder dass das Produkt nicht ausreichend kühl gelagert wurde, was bedeutet, dass das jeweilige Produkt für eine weitere Verwendung nicht geeignet ist.

Um eine unerwünschte neuerliche Aktivierung von Indikatoren nach ihrer ersten Aktivierung zu vermeiden, ist es bekannt, die Indikatoren auf ihrer Oberseite mit einem Filter zu versehen, welches für Lichtstrahlen des jeweils relevanten Wellenlängenbereichs zumindest weitgehend undurchlässig ist. Solche Filter können beispielsweise als Selbstklebeetikett auf die temperatur- und zeitsensitive Schicht eines Indikators unmittelbar nach dessen Aktivierung aufgebracht werden.

Mit den genannten Filtern versehene Indikatoren sind in Verbindung mit jeglicher Art von verderblichen Produkten sinnvoll einsetzbar, insbesondere sind sie für Lebensmittelprodukte, Arzneimittel, Blutkonserven, etc. geeignet.

Beim Einsatz von solchen Indikatoren ist es aufgrund deren Verwendung bei der Massenproduktion und der damit verbundenen hohen Stückzahlen von wesentlicher Bedeutung, dass die Produktion des Verbunds aus temperatur- und/oder zeitsensitiver Schicht und Filter mit möglichst geringem wirtschaftlichem Aufwand bewerkstelligbar ist. Dies ist auf nachteilige Weise bei herkömmlichen Filtern in der Regel nicht der Fall, da solche Filter üblicherweise einen vergleichsweise aufwändigen Drei-Schicht-Aufbau besitzen, bei dem auf der Unterseite einer Trägerschicht eine Klebeschicht und auf der Oberseite der Trägerschicht eine Filterschicht angeordnet sind.

Ferner ist an bekannten Indikatoren von Nachteil, dass deren an der Oberseite der Trägerschicht befindliche Filterschicht bei normaler Handhabung von mit Indikatoren gekennzeichneten Produkten leicht beschädigt oder zerstört werden kann. Eine solche Zerstörung erfolgt meist durch ein zumindest partielles Abkratzen der Filterschicht, was dann dazu führt, dass die zeit- und/oder temperatursensitive Schicht unterhalb der abgekratzten Filterbereiche in unerwünschter Weise, beispielsweise durch Sonnenlicht, nochmals aktiviert wird.

WO 2005/016654 A1 offenbart einen TTI, mit einem Substrat mit einem mittels Licht aktivierbaren Indikator, auf dem ein Protektor, der Filtereigenschaften besitzt, aufgebracht werden kann. US 2004/0253733 A1 beschreibt einen TTI mit folgendem Schichtaufbau: Substrat, Indikator, UV-Filter und Schutzschicht, wobei zwischen dem UV-Filter und der Schutzschicht ein Referenzring vorgesehen ist.

Eine Aufgabe der Erfindung besteht darin, einen Indikator der eingangs genannten Art bereitzustellen, der auf wirtschaftliche Art und Weise herstellbar ist und bei welchem zudem sichergestellt ist, dass die Filterschicht nach der Aktivierung des Indikators auch bei mechanischer Beanspruchung voll funktionsfähig bleibt.

Diese Aufgabe wird erfindungsgemäß dadurch gelöst, dass zwischen der temperatur- und/oder zeitsensitiven Schicht und einer Schutzschicht eine das Filtermaterial beinhaltende Klebstoffschicht angeordnet ist.

Erfindungsgemäß kann also die Schutzschicht als gegen mechanische Beanspruchung weitestgehend resistente, stabile Trägerschicht ausgebildet werden, die auf ihrer Unterseite eine Klebstoffschicht aufweist, über die die Schutzschicht klebend an der temperatur- und/oder zeitsensitiven Schicht befestigt werden kann. Da erfindungsgemäß das Filtermaterial in die Klebstoffschicht integriert ist, wird es möglich, das Filtermaterial bzw. die Klebstoffschicht zwischen der temperatur- und/oder zeitsensitiven Schicht und der Schutzschicht einzubetten, so dass das Filtermaterial letztlich durch die Schutzschicht vollflächig abgedeckt wird. Ein Verkratzen der Schutzschicht kann dementsprechend keine Beeinträchtigung der Filterwirkung hervorrufen, da das Filtermaterial vollständig unterhalb der Schutzschicht angeordnet ist.

Ein weiterer wesentlicher Vorteil der Erfindung ist darin zu sehen, dass sich der Verbund aus Schutzschicht, Klebstoffschicht und temperatur- und/oder zeitsensitiver Schicht auf äußerst wirtschaftliche Weise herstellen lässt, indem zuerst das Filtermaterial mit dem Klebstoff vermischt, anschließend das erzeugte Gemisch auf die Schutzschicht laminiert und schließlich das Laminat aus Schutzschicht und Klebstoff mit Filtermaterial auf die temperatur- und/oder zeitsensitive Schicht aufgeklebt wird.

Erfindungsgemäß lässt sich also ein nur zweischichtiger Aufbau des Filters aus Klebstoffschicht mit Filtermaterial und Schutzschicht realisieren, wobei zudem das die gewünschte Filterwirkung erzeugende Filtermaterial geschützt unterhalb der Schutzschicht angeordnet ist.

Bevorzugt ist es, wenn der Verbund aus Schutz- und Klebstoffschicht in Form eines separat handhabbaren Schutzetiketts auf die temperatur- und/oder zeitsensitive Schicht aufgebracht ist. Somit ist es beispielsweise möglich, die Temperatur- und/oder zeitsensitive Schicht in Form eines ersten Etiketts mittels eines ersten Applikators auf ein Produkt aufzubringen. Anschließend kann dann mittels eines zweiten Applikators der Verbund aus Schutz- und Klebstoffschicht in Form eines Schutzetiketts auf das erste Etikett aufgeklebt werden. Alternativ ist es auch denkbar, beide Etiketten mittels eines gemeinsamen Applikators aufzubringen, insbesondere dann, wenn beide Etiketten bereits vor dem Applikationsvorgang miteinander einen Verbund bilden.

Form und Größe der beiden Etiketten kann identisch, aber auch verschieden voneinander sein. Wichtig ist lediglich, dass die Größe des Schutzetiketts denjenigen Bereich des ersten Etiketts vollständig abdeckt, welcher durch die temperatur- und/oder zeitsensitive Schicht beansprucht wird.

Das separat handhabbare Schutzetikett kann sowohl als Linerless-Etikett oder aber auch als Trägeretikett ausgebildet sein. Ein Trägeretikett wird während des Applikationsvorgangs von einem Träger gelöst und ohne den Träger auf das erste Etikett geklebt. Ein Linerless-Etikett, welches ohne den genanten Träger auskommt, wird während des Applikationsvorgangs lediglich von einem Bandmaterial abgetrennt und dann als Ganzes auf das erste Etikett aufgebracht.

Besonders vorteilhaft ist es, wenn die Klebstoffschicht mit ihrer Unterseite direkt an die temperatur- und/oder zeitsensitive Schicht und mit ihrer Oberseite direkt an die Schutzschicht angrenzt. Mit einem solchen Aufbau kann ein lediglich zweischichtiges Schutzetikett zum Einsatz gelangen, welches - wie bereits erwähnt - besonders wirtschaftlich herstellbar ist.

Das in die Klebstoffschicht eingebrachte Filtermaterial kann als UV-Filter und/oder als Tageslichtfilter ausgebildet werden. Es sind jedoch auch andere Filtermaterialien denkbar, die je nach Art der zu bedeckenden temperatur- und/oder zeitsensitiven Schicht auszuwählen sind.

Die erfindungsgemäß vorgesehene Schutzschicht wird bevorzugt als transluzente oder transparente Folie ausgebildet. Zusätzlich kann in die Schutzschicht beispielsweise auch noch ein weiteres UV- und/oder Tageslichtfilter integriert werden, welches die Filterwirkung des in der Klebstoffschicht vorhandenen Filtermaterials verstärkt oder ergänzt.

Die Dicke der Klebstoffschicht kann zwischen 15 µm und 25 µm, bevorzugt zwischen 17 µm und 23 µm und insbesondere ungefähr 20 µm betragen. In diesem Fall steht für das Filtermaterial eine vergleichsweise dicke Schicht zur Verfügung, in die auf jeden Fall so viel Filtermaterial eingebracht werden kann, dass eine ausreichende Filterwirkung erzeugt wird. Aus dem Stand der Technik bekannte, auf der Oberseite von Trägerschichten vorgesehene Filterschichten besitzen üblicherweise lediglich eine Dicke zwischen 6 µm und 7 µm, was dazu führt, dass solche, relativ dünne und damit empfindliche Filterschichten relativ leicht beschädigt werden können. Dieses Problem wird nun erfindungsgemäß - wie bereits erwähnt - vollständig beseitigt.

Die erfindungsgemäß zum Einsatz gelangende Klebstoffschicht kann einen Hotmelt-Klebstoff oder einer Dispersionsklebstoff umfassen. Andere Klebstoffe sind ebenfalls denkbar.

Bevorzugt ist es, wenn der Verbund aus Schutz- und Klebstoffschicht bzw. das Schutzetikett neben der temperatur- und/oder zeitsensitiven Schicht auch noch zumindest eine neben der temperatur- und/oder zeitsensitiven Schicht angebrachte Referenzfarbe abdeckt. Anhand solcher Referenzfarben kann der aktuelle Zustand der temperatur- und/oder zeitsensitiven Schicht von einem Betrachter auf einfache Weise überprüft werden. Wenn die Referenzfarben mit den gleichen Schichten bedeckt sind, wie die temperatur- und/oder zeitsensitive Schicht, ist sichergestellt, dass der Betrachter hier keine störenden Farbverschiebungen wahrnimmt, da sowohl die Referenzfarben als auch die temperatur- und/oder zeitsensitive Schicht von den darüber liegenden Schichten in jeweils identischer Weise beeinflusst werden.

Die Erfindung betrifft weiterhin die Verwendung eines Verbunds aus einer Schutzschicht und einer ein Filtermaterial beinhaltenden Klebstoffschicht zur Herstellung eines Indikators der vorstehend beschriebenen Art.

Weitere bevorzugte Ausführungsformen der Erfindung sind in den abhängigen Ansprüchen genannt.

Die Erfindung wird nachfolgend anhand von Ausführungsbeispielen unter Bezugnahme auf die Figuren erläutert; in diesen zeigen:
- Fig. 1: in schematischer Darstellung eine temperatur- und/ oder zeitsensitive Schicht und eine damit noch nicht verbundene Schutzschicht, und
- Fig. 2: eine Darstellung gemäß Fig. 1, bei der die genannten Schichten miteinander klebend verbunden sind.

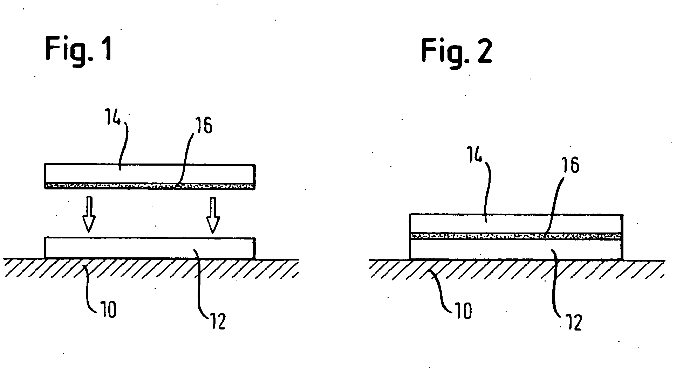

Fig. 1 zeigt einen Abschnitt eines Produkts 10, auf den eine temperatur- und/oder zeitsensitive Schicht 12 in geeigneter Weise, insbesondere klebend in Form eines Etiketts, aufgebracht ist. Oberhalb und von dieser Schicht 12 beabstandet ist eine Schutzschicht 14 vorgesehen, die an ihrer der Schicht 12 zugewandten Unterseite mit einer Klebstoffschicht 16 versehen ist, in welche erfindungsgemäß Filtermaterial integriert ist.

Das Laminat aus Schutzschicht 14 und Klebstoffschicht 16 wird oberhalb der Schicht 12 durch eine geeignete, nicht dargestellte, aus dem Stand der Technik bekannte Applikationsvorrichtung gehalten, wobei diese Vorrichtung entweder zur Verarbeitung von Linerless-Etiketten oder zur Verarbeitung von Trägeretiketten ausgebildet ist. Bei Verwendung von Trägeretiketten haftet die Klebstoffschicht 16 an einer geeigneten Trägerschicht, von der das Laminat aus Schutzschicht 14 und Klebstoffschicht 16 dann im Rahmen des Applikationsvorgangs in bekannter Weise, beispielsweise über eine spitzwinklige Abziehkante, abgeschält werden kann. Bei der Verwendung von Linerless-Etiketten entfällt die genannte Trägerschicht, da solche Linerless-Etiketten mit ihren Stirnseiten aneinander angrenzen und beim Aufbringen auf die Schicht 12 von dem jeweils angrenzenden Etikett abgetrennt werden.

Fig. 2 zeigt, dass nach dem Aufbringen der Schutzschicht 14 in Pfeilrichtung gemäß Fig. 1 letztlich ein Verbund erzeugt wird, bei dem die temperatur- und/oder zeitsensitive Schicht mit ihrer Unterseite am Produkt 10 klebt und die Schutzschicht wiederum über ihre Klebeschicht 16 an der Oberseite der temperatur- und/oder zeitsensitiven Schicht 12 klebt. Die das Filtermaterial beinhaltende Klebstoffschicht 16 ist dabei nach dem Sandwichprinzip zwischen den beiden Schichten 12, 14 eingebettet, so dass sie durch die Schutzschicht 14 gegen Beschädigungen von oben geschützt ist. Auf diese Art und Weise kann eine dauerhafte Wirkung des in der Klebstoffschicht 16 vorhandenen Filtermaterials sichergestellt werden.

### Bezugszeichenliste

- 10: Produkt
- 12: temperatur- und/oder zeitsensitive Schicht
- 14: Schutzschicht
- 16: Klebstoffschicht

## Patentansprüche

1. Indikator zur Kennzeichnung von Waren (10) mit einer temperatur- und/oder zeitsensitiven, mittels Lichtstrahlen aktivierten Schicht (12), welche auf ihrer Oberseite mit einem Filter (16) versehen ist,
wobei das Filtermaterial als UV-Filter und/oder als Tageslichtfilter ausgebildet ist,
**dadurch gekennzeichnet,**
**dass** zwischen der temperatur- und/oder zeitsensitiven Schicht (12) und einer Schutzschicht (14) eine das Filtermaterial beinhaltende Klebstoffschicht (16) angeordnet ist.

2. Indikator nach Anspruch 1,
**dadurch gekennzeichnet,**
**dass** der Verbund aus Schutz- und Klebstoffschicht (14, 16) in Form eines separat handhabbaren Schutzetiketts auf die temperatur- und/oder zeitsensitive Schicht (12) aufgebracht ist.

3. Indikator nach Anspruch 2,
**dadurch gekennzeichnet,**
**dass** das separat handhabbare Schutzetikett (14, 16) mittels eines Applikators als Linerless-Etikett oder als Trägeretikett auf die temperatur- und/oder zeitsensitive Schicht (12) aufgebracht ist.

4. Indikator nach einem der vorhergehenden Ansprüche,
**dadurch gekennzeichnet,**
**dass** die Klebstoffschicht (16) mit ihrer Unterseite direkt an die temperatur- und/oder zeitsensitive Schicht (12) und mit ihrer Oberseite direkt an die Schutzschicht (14) angrenzt.

5. Indikator nach einem der vorhergehenden Ansprüche,
**dadurch gekennzeichnet,**
**dass** die Schutzschicht (14) als transluzente oder transparente Folie ausgebildet ist.

6. Indikator nach einem der vorhergehenden Ansprüche,
**dadurch gekennzeichnet,**
**dass** die Schutzschicht (14) als zusätzliches UV- und/oder Tageslichtfilter ausgebildet ist.

7. Indikator nach einem der vorhergehenden Ansprüche,
**dadurch gekennzeichnet,**
**dass** die Dicke der Klebstoffschicht (16) zwischen 15 um und 25 um, bevorzugt zwischen 17um und 23 um und insbesondere ungefähr 20 um beträgt.

8. Indikator nach einem der vorhergehenden Ansprüche,
**dadurch gekennzeichnet,**
**dass** die Klebstoffschicht (16) einen Hotmelt-Klebstoff oder einen Dispersionsklebstoff umfasst.

9. Indikator nach einem der vorhergehenden Ansprüche,
**dadurch gekennzeichnet,**
der Verbund aus Schutz- und Klebstoffschicht (14, 16) neben der temperatur- und/oder zeitsensitiven Schicht (12) auch noch zumindest eine neben der temperatur- und/oder zeitsensitiven Schicht (12) angebrachte Referenzfarbe abdeckt.

10. Verwendung eines Verbunds aus einer Schutzschicht (14) und einer ein Filtermaterial beinhaltenden Klebstoffschicht (16) zur Herstellung eines Indikators nach einem der vorhergehenden Ansprüche, wobei das Filtermaterial als UV-Filter und/oder als Tageslichtfilter ausgebildet ist.

11. Verwendung nach Anspruch 10,
**dadurch gekennzeichnet,**
**dass** der Verbund aus Schutz- und Klebstoffschicht (14, 16) in Form eines separat handhabbaren Schutzetiketts auf die temperatur- und/oder zeitsensitive Schicht (12) aufbringbar ist.

12. Verwendung nach einem der Ansprüche 10 oder 11,
**dadurch gekennzeichnet,**
**dass** das separat handhabbare Schutzetikett (14, 16) mittels eines Applikators als Linerless-Etikett oder als Trägeretikett auf die temperatur- und/oder zeitsensitive Schicht (12) aufbringbar ist.

## Claims

1. An indicator for marking goods (10) having a temperature-sensitive and/or time-sensitive layer (12) which is activated by light rays and which is provided with a filter (16) at its upper side, wherein the filter material is designed as a UV filter and/or as a daylight filter,
**characterised in that**
an adhesive layer (16) including the filter material is arranged between the temperature-sensitive and/or time-sensitive layer (12) and a protective layer (14).

2. An indicator in accordance with claim 1, **characterised in that** the composite of protective layer and adhesive layer (14, 16) is applied to the temperature-sensitive and/or time-intensive layer (12) in the form of a separately handlable protective label.

3. An indicator in accordance with claim 2, **characterised in that** the separately handlable protective label (14, 16) is applied to the temperature-sensitive and/or time-sensitive layer (12) as a linerless label or as a carrier label by means of an applicator.

4. An indicator in accordance with any one of the preceding claims, **characterised in that** the lower side of the adhesive layer (16) is directly adjacent to the temperature-sensitive and/or time-sensitive layer (12) and its upper side is directly adjacent to the protective layer (14).

5. An indicator in accordance with any one of the preceding claims, **characterised in that** the protective layer (14) is designed as a translucent or transparent film.

6. An indicator in accordance with any one of the preceding claims, **characterised in that** the protective layer (14) is designed as an additional UV filter and/or daylight filter.

7. An indicator in accordance with any one of the preceding claims, **characterised in that** the thickness of the adhesive layer (16) is between 15 µm and 25 µm, preferably between 17 µm and 23 µm, and in particular approximately 20 µm.

8. An indicator in accordance with any one of the preceding claims, **characterised in that** the adhesive layer (16) includes a hot melt adhesive or a dispersion adhesive.

9. An indicator in accordance with any one of the preceding claims, **characterised in that** the composite of protective layer and adhesive layer (14, 16) also covers at least a reference colour applied besides the temperature-sensitive and/or time-sensitive layer (12) in addition to the temperature-sensitive and/or time intensive layer (12).

10. Use of a composite of a protective layer (14) and of an adhesive layer (16) including a filter material for the manufacture of an indicator in accordance with any one of the preceding claims, wherein the filter material is designed as a UV filter and/or as a daylight filter.

11. Use in accordance with claim 10, **characterised in that** the composite of protective layer and adhesive layer (14, 16) can be applied to the temperature-sensitive and/or time-sensitive layer (12) in the form of a separately handlable protective label.

12. Use in accordance with one of the claims 10 or 11, **characterised in that** the separately handlable protective label (14, 16) is applied to the temperature-sensitive and/or time-sensitive layer (12) as a linerless label or as a carrier label by means of an applicator.

## Revendications

1. Indicateur pour le marquage de marchandises (10), comprenant une couche (12) sensible à la température et/ou au temps et activée au moyen de rayons lumineux, laquelle est dotée sur sa surface supérieure d'un filtre (16), et le matériau du filtre est réalisé sous forme de filtre pour la lumière ultraviolette et/ou de filtre pour la lumière diurne,
**caractérisé en ce que**
une couche de colle (16) qui contient le matériau de filtre est agencée entre la couche (12) sensible à la température et/ou au temps et une couche protectrice (14).

2. Indicateur selon la revendication 1,
**caractérisé en ce que** le composite formé de la couche de protection et de la couche de colle (14, 16) est appliqué sur la couche (12) sensible à la température et/ou au temps sous la forme d'une étiquette de protection susceptible d'être manipulée séparément.

3. Indicateur selon la revendication 2,
**caractérisé en ce que** l'étiquette de protection (14, 16) susceptible d'être manipulée séparément est appliquée sur la couche (12) sensible à la température et/ou au temps au moyen d'un applicateur sous la forme d'une étiquette sans doublage ou d'une étiquette sur support.

4. Indicateur selon l'une des revendications précédentes,
**caractérisé en ce que** la couche de colle (16) est telle que sa face inférieure est directement adjacente à la couche (12) sensible à la température et/ou au temps, et que sa face supérieure est directement adjacente à la couche de protection (14).

5. Indicateur selon l'une des revendications précédentes,
**caractérisé en ce que** la couche de protection (14) est réalisée sous la forme d'une feuille translucide ou transparente.

6. Indicateur selon l'une des revendications précédentes,
**caractérisé en ce que** la couche de protection (14) est réalisée sous la forme d'un filtre supplémentaire pour la lumière ultraviolette et/ou la pour lumière diurne.

7. Indicateur selon l'une des revendications précédentes,
**caractérisé en ce que** l'épaisseur de la couche de colle (16) est entre 15 µm et 25 µm, de préférence entre 17 µm et 23 µm, et en particulier environ 20 µm.

8. Indicateur selon l'une des revendications précédentes,
**caractérisé en ce que** la couche de colle (16) est une colle thermofusible ou une colle à dispersion.

9. Indicateur selon l'une des revendications précédentes,
**caractérisé en ce que** le composite formé de la couche de protection et de la couche de colle (14, 16) recouvre, outre la couche (12) sensible à la température et/ou au temps, également encore au moins une couleur de référence appliquée à côté de la couche (12) sensible à la température et/ou au temps.

10. Utilisation d'un composite formé d'une couche de protection (14) et d'une couche de colle (16) contenant un matériau filtrant pour la réalisation d'un indicateur selon l'une des revendications précédentes, dans laquelle le matériau filtrant est réalisé sous forme de filtre pour la lumière ultraviolette et/ou pour la lumière diurne.

11. Utilisation selon la revendication 10,
**caractérisé en ce que** le composite formé de la couche de protection et de la couche de colle (14, 16) est susceptible d'être appliqué sur la couche (12) sensible à la température et/ou au temps sous la forme d'une étiquette de protection susceptible d'être manipulée séparément.

12. Utilisation selon l'une des revendications 10 ou 11,
**caractérisé en ce que** l'étiquette de protection (14, 16) susceptible d'être manipulée séparément est susceptible d'être appliquée sur la couche (12) sensible à la température et/ou au temps (12) au moyen d'un applicateur sous forme d'une étiquette sans doublage ou d'une étiquette sur support.
